## Europäisches Patentamt

## European Patent Office

## Office européen des brevets

(19)

(11) Veröffentlichungsnummer: **0 092 851**
**B1**

(12) **EUROPÄISCHE PATENTSCHRIFT**

(45) Veröffentlichungstag der Patentschrift:
02.08.89

(51) Int. Cl.⁴: **A 47 J 39/00**

(21) Anmeldenummer: **83104179.3**

(22) Anmeldetag: **28.04.83**

(54) Vorrichtung zur Wärmebehandlung von Substanzen, insbesondere Nahrungsmitteln.

(30) Priorität: **28.04.82 DE 3215812**

(43) Veröffentlichungstag der Anmeldung:
**02.11.83 Patentblatt 83/44**

(45) Bekanntmachung des Hinweises auf die Patenterteilung:
**02.08.89 Patentblatt 89/31**

(84) Benannte Vertragsstaaten:
**AT CH DE FR GB IT LI NL SE**

(56) Entgegenhaltungen:
**DE-B-2 541 374**
**DE-B-2 731 191**
**DE-C-67 042**
**DE-C-196 502**
**FR-A-319 235**
**GB-A-716 118**
**GB-A-966 459**

(73) Patentinhaber: **Convotherm- Elektrogeräte GmbH, Talstrasse 35, D-8111 Untereglfing (DE)**

(72) Erfinder: **Der Erfinder hat auf seine Nennung verzichtet**

(74) Vertreter: **Zmyj, Erwin, Dipl.- Ing., Rosenheimer Strasse 52, D-8000 München 80 (DE)**

**Beschreibung**

Die Erfindung bezieht sich auf eine Vorrichtung zur Wärmebehandlung von Substanzen, insbesondere Nahrungsmitteln, unter Zuhilfenahme von sich bewegendem Dampf als Wärmeträger mit einem Dampferzeuger mit temperaturgeregeltem Heizelement, der durch eine Druckbegrenzungsvorrichtung gegen Überdruck gesichert und mit einem Garraum in offener Verbindung steht, welcher einen Kondensatablauf und einen Wrasenabzug aufweist, wobei im Garraum mittels Druckbegrenzungsvorrichtungen in den nach außen führenden Leitungen ein Betriebsdruck einstellbar ist, der unterhalb desjenigen Druckes liegt, bei welchem die Überdrucksicherung des Dampferzeugers öffnet.

Bei einer bekannten Vorrichtung dieser Art (DE-A-2 731 191) steht der Garraum über eine Leitung, die von der Kondensatablaufleitung abzweigt, ständig mit der Atmosphäre in Verbindung. Hierdurch erfolgt die Wärmebehandlung bei Atmosphärendruck mit einem Dampf-Luftgemisch, da aufgrund dieser Verbindung nicht auszuschliessen ist, daß insbesondere dann, wenn bei einer Wassereinspeisung in den Dampferzeuger die Dampflieferung kurzfristig nachläßt und sich unter Umständen ein geringer Unterdruck im Garraum aufgrund der Abkühlung im Verdampfer bilden kann, Luft in den Garraum strömt. Bei diesem Dampf-Luftgemisch ist die Wärmeabgabe an das zu behandelnde Gut nicht so günstig wie von Dampf allein, so daß mit zunehmendem Luftanteil die Gartemperatur absinkt. Um den Luftanteil jedoch in dem mit der Atmosphäre in Verbindung stehenden Garraum zu vermindern ist es notwendig mit ständigem Damfüberschuß zu arbeiten. Dies setzt aber eine äußerst überschüssige Dampfproduktion und damit einen sehr hohen Energieverbrauch voraus.

Weiterhin ist eine Vorrichtung dieser Art bekannt (DE-A-2 541 374), bei welcher mittels mechanisch arbeitender Sperrvorrichtungen bzw. Druckbegrenzer im Garraum ein gewisser Überdruck erzeugt werden kann, der in Verbindung mit der ständig neuen Dampfzuführung zu einem verminderten Luftanteil führt, was erwünscht ist. Die dort verwendeten Druckbegrenzungsvorrichtungen arbeiten jedoch mit mechanisch bewegten Teilen, wodurch sich leicht Störungen ergeben können, da aus dem Garraum mit Fett beladene Wrasen durch diese Druckbegrenzungsvorrichtungen hindurchströmen. Um das Fett von diesen Druckbegrenzungsvorrichtungen fernzuhalten, muß ein gesondertes Fettfilter vorgesehen sein, was einen zusätzlichen Aufwand bedeutet.

Aufgabe der Erfindung ist es, die zusätzliche Anordnung von Fettfiltern zu vermeiden und unempfindliche betriebssichere Druckbegrenzungsvorrichtungen vorzusehen.

Diese Aufgabe wird erfindungsgemäß dadurch gelöst, daß jede Druckbegrenzungsvorrichtung als Wassersperre nach Art eines Siphons ausgebildet ist, deren wirksame zu verdrängende Wasserhöhe, die Höhe der Druckbegrenzung bestimmt.

Diese als Wassersperren ausgebildeten Druckbegrenzungsvorrichtungen sind nicht nur für die aus dem Garraum austretenden Leitungen vorgesehen, sondern die Überdrucksicherung für den Dampferzeuger, der mit dem Garraum in offener Verbindung steht, so daß Dampferzeuger und Garraum eine Einheit bilden, ist ebenfalls als Wassersperre ausgebildet.

In vorteilhafter Ausgestaltung der Erfindung weisen sämtliche nach außen aus dem Garraum führenden druckbegrenzenden Leitungen jeweils eine Druckbegrenzungsvorrichtung auf, die als Mischkondensator mit Wassersperre ausgebildet ist. Hierdurch wird nicht nur eine besonders einfache und robuste sowie betriebssichere Druckbegrenzungsvorrichtung geschaffen, die gegenüber federdruckbelasteten Ventilen oder ähnlichen mechanischen Ausgestaltungen den Vorteil der Einfachheit aufweist, sondern durch diese Ausgestaltung wird auch eine sichere Abführung der im Garraum anfallenden Flüssigkeit wie z. B. herabtropfendes Fett gewährleistet, da das im Mischkondensator vorhandene Wasser diese Flüssigkeiten aufnimmt, so daß sie bei einem Wasserwechsel im Kondensator entfernt werden können. Ein weiterer wesentlicher Vorteil besteht darin, daß der nicht kondensierbare Anteil der Wrasen beim Durchtritt durch die Wassersperre gereinigt wird, so daß dieser gasförmige Anteil der in die Atmosphäre entweicht, frei von mitgeführten Stoffen, wie z. B. Fett ist, so daß sowohl im Gerät als auch außerhalb desselben Filter entfallen können. Vorzugsweise weisen die aus dem Garraum führenden Leitungen eine gemeinsame Druckbegrenzungsvorrichtung auf.

Der vorzunehmende Austausch des Wassers in dem Mischkondensator kann in weiterer Ausgestaltung der Erfindung durch einen Temperaturfühler geregelt sein, der in der Wassersperre vorgesehen ist. Hierdurch wird gewährleistet, daß das durch die Kondensation der Wrasen erwärmte Wasser rechtzeitig ausgetauscht wird, wodurch gleichzeitig die im Wasser aufgenommenen flüssigen oder festen Bestandteile, die aus dem Garraum, kommen, abgeliefert werden.

Eine vorteilhafte Ausgestaltung des Mischkondensators ergibt sich dadurch, daß dieser in einen Kondensationsraum, der eine Wasserfüllung aufweist und einen Ableitungsraum unterteilt ist, daß der Kondensationsraum durch eine von oben in die Wasserfüllung eintauchende Trennwand in zwei Räume getrennt ist, von dem der eine mit dem Garraum und der andere mit dem Ableitungsraum in Verbindung steht, daß die Eintauchtiefe der Trennwand die Druckhöhe der Druckbegrenzung bestimmt und daß der Ableitungsraum über eine Abflußleitung mit einer gebäudefesten Abflußleitung mit Siphonverschluß und über eine weitere Leitung mit der Atmosphäre in Verbindung steht. Hierdurch wird eine problemlose Entfernung der im Mischkondensator anfallenden Rückstände, wie z. B. Fettrückstände, ermöglicht und außerdem ergibt sich durch diese Ausgestaltung ein doppelter Siphonverschluß gegenüber aufsteigenden Kanaldämpfen, die einerseits durch die gebäudefeste übliche Abflußleitung an einem Aufsteigen gehindert werden und außerdem bildet der Mischkondensator einen zweiten Siphon der ein Eindringen von Kanalgasen in den Garraum verhindert.

Bei dieser Ausführungsform wird das abzuleitende Wasser in die Abflußleitung geführt und die gasförmigen Anteile, die durch den Mischkondensator hindurchtreten gelangen aus dem Ableitungsraum in die Atmosphäre.

Wenn in weiterer Ausgestaltung der Erfindung die Wasserzuführung in dem mit dem Garraum in Verbindung stehenden Raum des Kondensators einmündet, so wird sichergestellt, daß dieser Raum, in den die festen und flüssigen Rückstände aus dem Garraum gelangen, auch durch das nachströmende Wasser ausgespült werden.

Es empfiehlt sich den mit dem Garraum in Verbindung stehenden Raum klein gegenüber dem anderen Raum des Kondensators zu halten, damit die zwangsläufig eintretenden Druckschwankungen und die damit verbundenen Schwankungen der Flüssigkeitshöhe im Mischkondensator sich in demjenigen Raum, der mit dem Ableitungsraum verbunden ist, nicht in starkem Maße bemerkbar machen, da sonst dieser Raum zu rasch entleert werden würde. Wenn man in erfindungsgemäßer Weise den mit dem Garraum in Verbindung stehenden Raum klein hält, so wird die in diesem Raum eintretende Schwankung der Flüssigkeitshöhe nur eine geringe Schwankung in dem anderen Raum herbeiführen, der wesentlich größer ist und damit auch ein wesentlich größeres Wasservolumen aufnimmt.

Ein besonderes Problem bei dem Betrieb dieser Vorrichtung ergibt sich immer dann, wenn in der erfindungsgemäßen Vorrichtung bei einer Temperatur von 150 und 250° bei Dampfatmosphäre gebraten werden soll. Bei einem längeren Betrieb des Gerätes tritt nämlich der Umstand ein, daß der Garraum so aufgeheizt ist, daß die über den Wrasenabzug oder eine gesonderte Meßleitung entweichende Luft so stark aufgeheizt ist, daß sie in der Lage ist den in dieser Leitung vorgesehenen Wärmefühler so zu beeinflussen, daß er das Heizelement des Dampferzeugers nicht einschaltet, obwohl kein Dampf vorhanden ist. Der Bratvorgang wird somit in einer Heißluftatmosphäre durchgeführt, wodurch dem Braten Feuchtigkeit entzogen wird. Um dies zu verhindern ist es erforderlich in den Garraum Wasserdampf einzuführen, was aber nur möglich ist, wenn der Wärmefühler mit einer zu geringen Wärmemenge durch die abziehenden Gase beaufschlagt wird, so daß er das Heizelement des Dampferzeugers wieder einschaltet. Wie oben erwähnt, wird aber durch die ausströmende heiße Luft ein Wärmeinhalt der abziehenden Gase registriert, der über dem Schaltpunkt liegt, d. h. der Wärmefühler ist nicht in der Lage zu unterscheiden ob die auf ihn übertragene Wärmemenge von sehr heißer Luft oder von Dampf herrührt.

In einer weiteren Ausgestaltung der Erfindung wird dafür gesorgt, daß auch Bratvorgänge mit Dampf auch bei längerer Betriebsweise durchgeführt werden können.

Bei dieser Ausgestaltung der Erfindung ist der zur Regelung des Heizelementes des Dampferzeugers dienende Wärmefühler in einer offenen oder druckbegrenzenden Wrasenabzugsleitung oder gesonderten Meßleitung vorgesehen, die einer Kühlwirkung für die abziehenden Gase unterliegt, und der Wärmefühler ist an einer Stelle der Leitung angeordnet an der der Wärmeinhalt der abziehenden Gase so weit abgesenkt ist, daß bei Fehlen eines Dampfanteils das Heizelement des Dampferzeugers eingeschaltet wird.

Durch diese erfindungsgemäße Ausgestaltung derjenigen Leitung, in der der Wärmefühler angeordnet ist, wird erreicht, daß die in diese Leitung einströmende Heißluft so weit abgekühlt wird, daß sie bei Erreichen des Wärmefühlers keinen Dampf mehr vortuschen kann, wie das bisher möglich war, sondern diese nicht kondensierbaren Gase sind soweit abgekühlt, daß der Wärmefühler eine Wärmemenge aufnimmt, bei welcher das Heizelement eingeschaltet wird. Dieses Einschalten des Heizelementes unterbleibt nur dann, wenn trotz der vorgenommenen Abkühlung immer noch Sattdampf in den abziehenden Gasen vorhanden ist, der sich am Wärmefühler niederschlägt, wodurch der Wärmefühler soviel Wärme aufnimmt, daß er das Heizelement nicht einschaltet. Die Kühlung kann dadurch erreicht werden, daß die Abflußleitung land, z. B. als Kühlschlange ausgebildet ist oder die Meßleitung kann durch eine Kühlvorrichtung, z. B. den Mischkondensator hindurchgeführt werden, wodurch die Leitung an ihrer Außenseite soweit abgekühlt wird, daß die im Inneren strömenden Gase ebenfalls abkühlen, bevor sie den Wärmefühler erreichen.

Wenn die Meßleitung entweder durch einen kleinen Querschnitt oder durch eine zusätzliche Drossel soweit gedrosselt ist, daß die Menge der durch diese Leitung ausströmenden Gase bezogen auf das Gesamtvolumen des Garraumes vernachlässigbar klein ist, so kann diese Leitung mit der Atmosphäre in Verbindung stehen, ohne, daß hierfür eine Druckbegrenzungsvorrichtung notwendig wäre. Selbstverständlich kann auch diese Leitung an die Druckbegrenzungsvorrichtung angeschlossen sein, in die auch die Kondensatleitung oder eine Wrasenabzugsleitung mit großem querschnitt einmündet.

Gemäß einer weiteren Ausgestaltung der Erfindung umfaßt die Wassersperre für die Überdrucksicherung des Dampferzeugers ein U-Rohr mit Wasserfüllung und eine Flüssigkeitssonde, die bei Berührung mit der Flüssigkeit ein Signal zu Steuerung der Heizung des Dampferzeugers liefert, wobei der eine Rohrschenkel des U-Rohres mit dem Dampferzeuger über dem Wasserniveau verbunden und der andere Rohrschenkel, der mit der Atmosphäre in Verbindung steht, die Flüssigkeitssonde aufweist.

Für diese Überdrucksicherung in Form einer Wassersperre gelten die eingangs erwähnten Vorteile, d. h. es sind keine mechanisch bewegten Ventile vorhanden, die verstopfen könnten. Die Wassersäule im U-Rohr läßt sich stets proportional zu dem im Dampferzeuger herrschenden Druck verschieben und ist somit außerordentlich zuverlässig.

Eine wesentliche Vereinfachung der Vorrichtung ergibt sich aufgrund einer Weiterbildung der Erfindung die darin besteht, daß der freie Rohrschenkel über einen nach abwärts gerichteten Rohrkrümmer und ein daran anschließendes Fallrohr, das mit einem Entlüftungsrohr verbunden ist, mit dem Kondensator in Verbindung steht. Hierdurch wird einerseits bei einem unerwartet auftretenden Überdruck die verdrängte Wassersäule aufgefangen und in den Kondensator geleitet und andererseits wird die gleiche Leitung für die Entlüftung des Kondensators herangezogen.

Wenn in weiterer Ausgestaltung der Erfindung in den freien Rohrschenkel die Speisewasserzuführung für den Dampferzeuger einmündet, sowird nicht nur die Vorschrift erfüllt, daß die Einspeisung über dem Wasserspiegel im Dampferzeuger erfolgen soll, sondern auch die Forderung erfüllt, wonach die Wassereinspeisung druckfrei also in Verbindung mit der Atmosphäre erfolgen soll. Die mit dem Fallrohr und damit mit dem freien Schenkel des U-Rohres verbundene Entlüftungsleitung dient gleichzeitig dazu, eine Beeinflussung in das Speisewassernetz hinein aufgrund von Druckänderungen zu vermeiden.

Wenn in weiterer Ausgestaltung der Erfindung das U-Rohr über eine zusätzliche Verbindungsleitung mit dem Dampfkessel auf einem Niveau verbunden ist, das sich unterhalb desjenigen Wasserstandes befindet, der durch eine Wasserniveausonde garantiert ist, so wird nicht nur über die Speisewasserzuführungsleitung sondern auch über diese Verbindungsleitung gewährleistet, daß in dem U-Rohr stets eine Flüssigkeitsvorlage für die Überdrucksicherung vorhanden ist. Bei Eintreten eines schädlichen Überdruckes wird nämlich das in dem U-Rohr vorhandene Wasser durch den Dampf hinausgedrückt, so daß der Dampf über die Entlüftungsleitung entweichen kann.

Wenn man in weiterer Ausgestaltung der Erfindung die Wassermangelsonde und/oder Wasserniveausonde in dem U-Rohr anordnet, so werden hierdurch zwei Vorteile erreicht. Der eine Vorteil besteht darin, daß bei einem plötzlichen Austreten von Wasser aus dem U-Rohr das Ventil der Wasserspeiseleitung sofort geöffnet wird und andererseits werden die Beeinflussungen der Wasserniveausonde durch brodelndes Wasser verhindert. Bekanntlich kommt es bei der Dampfentwicklung zu einer heftigen Bewegung des Wassers, so daß aufgrund der dadurch unruhigen Wasseroberfläche ein falscher Wasserstand angezeigt wird. In dem U-Rohr ist eine solche Auswirkung nicht vorhanden, da hier das Wasser sich in einer beruhigten Zone befindet. Die Wassermangelsonde schaltet die Heizung des Dampferzeugers vollständig ab, wenn ein entsprechender Wassermangel angezeigt ist.

Für bestimmte Betriebszustände kann es erforderlich sein, die Überdrucksicherung mit einer Dämpfung zu versehen, um bei einmalig und kurzfristigen auftretenden Druckstößen ein Ausschalten des Heizelementes zu vermeiden. Hierfür kann beispielsweise in weiterer Ausgestaltung der Erfindung im U-Rohr eine Dämpfungseinrichtung für die im U-Rohr auftretenden Schwingungen der Wassersäule vorgesehen sein. Es kann aber auch ein elektrisches Dämpfungsglied in der Regeleinrichtung vorgesehen sein.

Für die Aufheizung des Wärmeträgers kann eine Heizvorrichtung vorgesehen sein, wodurch mehrere Programme bei der Behandlung der Substanzen, insbesondere Nahrungsmittel möglich sind. So kann beispielsweise ein bestimmtes Nahrungsmittel gedämpft werden, wobei für diesen Vorgang die Heizvorrichtung nicht eingeschaltet wird, sondern in den Garraum wird nur Dampf aus dem Dampferzeuger eingeblasen. Weiterhin ist es möglich zu braten, backen und zu dünsten, wobei aus dem Dampferzeuger Dampf zugeführt wird, der mittels der Heizung überhitzt wird. Es wird also bei gleichbleibendem Druck der Dampf überhitzt, wordurch die Atmosphäre in dem Garraum trockener wird.

Weiterhin ist es möglich zu grillen und zu backen und zwar ohne Dampfzufuhr aus dem Dampferzeuger jedoch mit eingeschalteter Heizung für den Wärmeträger, der sich aus Luft und einem Dampfanteil zusammensetzt, der aus dem zu behandelndem Nahrungsmittel stammt. Aufgrund der Druckbegrenzungsvorrichtung wird verhindert, daß dieser Dampfanteil zu rasch entweicht, wodurch das zu behandelnde Gut zu rasch austrocknen würde. Die erfindungsgemäße Vorrichtung sichert also auch dann eine gewisse Dampfatmosphäre in dem Garraum, wenn kein Dampf aus dem Dampferzeuger in den Garraum eingeführt wird. Der Wärmeträger kann durch einen Lüfter oder ein Gebläse in Bewegung versetzt werden oder die Bewegung kann dadurch zustande kommen, daß der Dampf aus dem Dampferzeuger in gerichteter Strömung in den Garraum geleiter wird, wodurch auf diese Weise eine Umwälzung des Warmeträgers eintritt. Diese beiden Arten der Bewegung des Wärmeträgers sind im Oberbegriff des Anspruchs 1 gemeint, wenn von einem sich bewegenden Dampf als Wärmeträger gesprochen wird.

Die Erfindung ist in der Zeichnung beispielsweise dargestellt. In dieser zeigen:

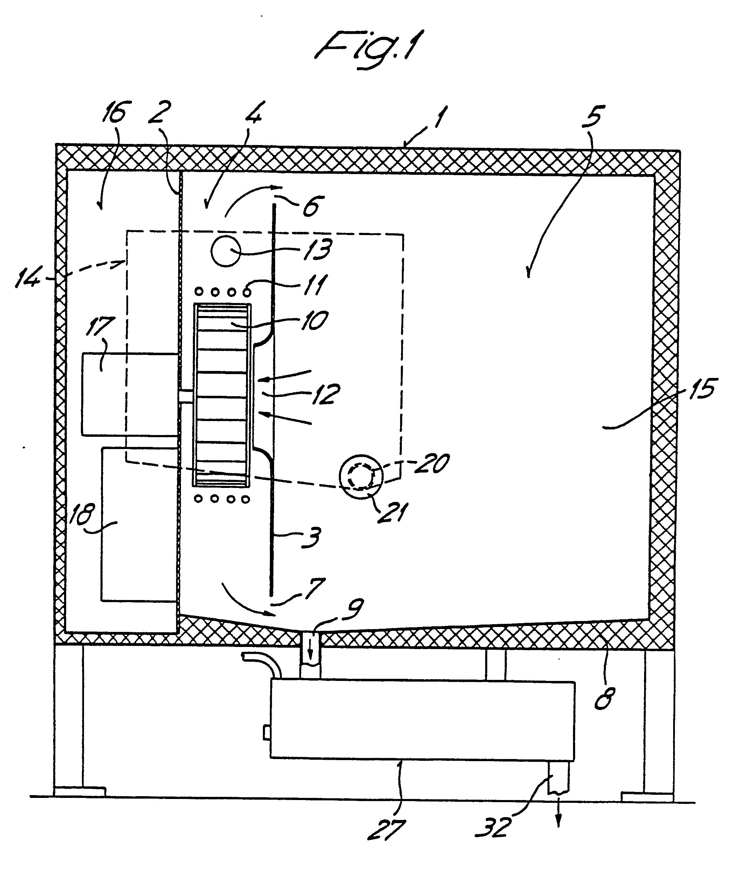

Fig. 1 einen vertikalen Schnitt durch eine erfindungsgemäße Vorrichtung, von der Vorderseite aus in die Vorrichtung hinein gesehen, und

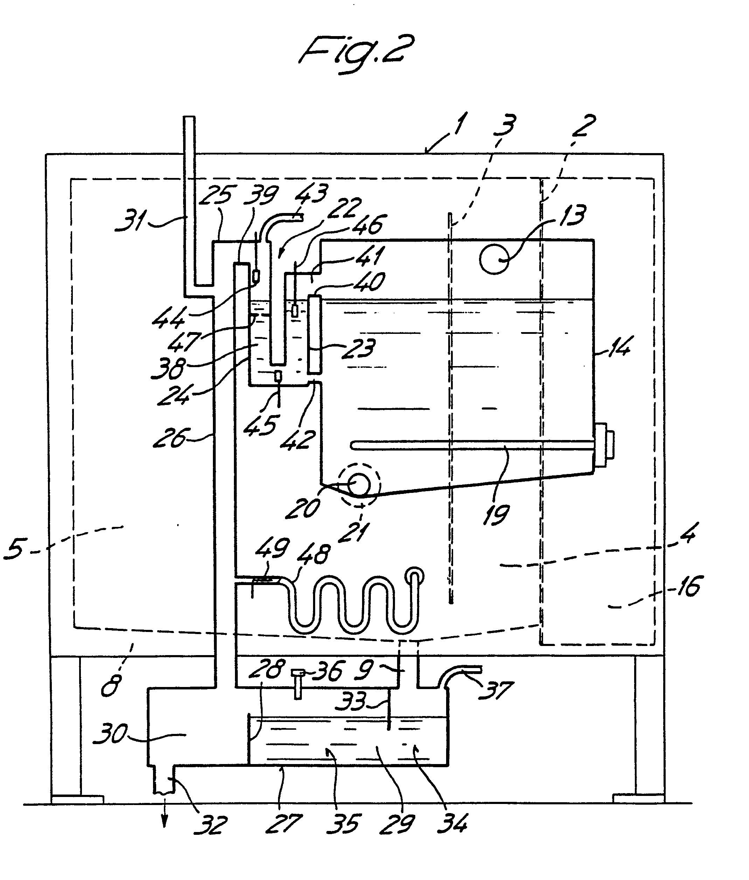

Fig. 2 eine Rückansicht der Vorrichtung mit abgenommener Rückwand.

Die Vorrichtung zur Wärmebehandlung von Nahrungsmitteln stellt ein Gerät dar, das ein Gehäuse 1 umfaßt, welches außer der üblichen nicht dargestellten Frontverkleidung und Tür eine Trennwand 2 aufweist, die das Gehäuse in zwei dicht voneinander getrennte Räume unterteilt. In dem einen Raum des Gehäuses ist durch eine weitere Trennwand 3 ein Dampfeinspeiseraum 4 von einem Garraum 5 abgetrennt. Über Schlitze 6 und 7 ist der Dampfeinspeiseraum mit dem Garraum verbunden. Der Boden des Garraumes ist mit 8 bezeichnet und mündet in einen Ablauf 9, der als Wrasenabzug, Kondensatablauf und als Auslaß für Fett und Reinigungsflüssigkeiten dient.

In dem Dampfeinspeiseraum 4 ist ein Gebläse 10 mit Heizung 11 für eine Aufheizung des Wärmeträgers, der im Gleichgewichtszustand nahezu aus Dampf besteht, vorgesehen. Durch eine Öffnung 12 in der Trennwand 3 wird der Wärmeträger aus dem Garraum 5 eingesaugt und über die Schlitze 6 und 7 in den Garraum nach Aufheizung hineingedrückt. In diesem Dampfeinspeiseraum mündet ein Dampfeinlaßstutzen 13 eines Dampferzeugers 14, der sich hinter der Rückwand 15 des Gerätes befindet. In dem links von der Trennwand 2 befindlichen Raum des Gerätes, der mit 18 bezeichnet ist, ist ein Motor 17 für das Gebläse 10 und sämtliche Steuerelemente untergebracht, die insgesamt mit 18 bezeichnet sind und zur Steuerung der Heizung 11, der Heizung 19 des Dampferzeugers 14 sowie sonstiger zum Betrieb des Gerätes notwendiger Elemente dienen. Der Motor 17 und die Steuerelemente 18 befinden sich also an der einen Seite des Gerätes während der Dampferzeuger 14 an der Rückseite des Gerätes angeordnet ist. Hierdurch ist es möglich diesen Dampferzeuger 14 so hoch anzubringen, daß sein Wasserablaßstutzen 20 oberhalb des Garraumbodens 8 zu liegen kommt, wodurch eine den Wasserablaßstutzen 20 verschließende Verschlußkappe 21 leicht zugänglich innerhalb des Garraumes 5 angeordnet ist.

Die Frischwassereinspeisung in den Dampferzeuger 14 erfolgt über ein U-Rohr 22 dessen einer Schenkel 23 mit dem Dampferzeuger 14 und dessen anderer Schenkel 24 über einen nach abwärts gerichteten Rohrkrümmer 25 mit einem Fallrohr 28 in Verbindung steht, welches in einen Kondensator 27 mündet, in den auch der Ablauf 9 aus dem Garraum 5 einmündet. Der Kondensator 27 ist als Mischkondensator ausgebildet und weist einen durch eine Begrenzungswand 28 abgegrenzten Kondensationsraum 29 und einen Ableitungsraum 30 auf, in den das Fallrohr 28 einmündet, welches über ein Abzweigrohr 31, das als Entlüftungsrohr dient, mit der Atmosphäre verbunden ist.

Der Ableitungsraum 30 ist über eine Abflußleitung 32 mit einer üblichen Abflußleitung verbunden, die nicht dargestellt ist, und welche bunden, die nicht dargestellt ist, und welche einen üblicherweise vorgesehenen Siphon aufweist, der eine Absperrung gegen aufsteigende Kanaldämpfe bildet.

Der Kondensationsraum 29 ist durch eine nach abwärts gerichtete Trennwand 33 nochmals unterteilt, die in das in dem Kondensationsraum 29 vorhandene Wasserbad eintaucht und den Kondensationsraum in einen Raum 34 und einen Raum 35 unterteilt, wobei der Raum 35 mit dem Ableitungsraum 30 und der Raum 34 über den Ablauf 9 mit dem Garraum in Verbindung steht. Auf diese Weise ist der Garraum 5 von dem Ableitungsraum 30, der über das Fallrohr 28 und die Entlüftungsleitung 31 mit der Atmosphäre in Verbindung steht, getrennt. Die Eintauchtiefe der Trennwand 33 in das in dem Kondensationsraum 29 vorhandenen Wasser bestimmt die Druckhöhe, die sich in dem Garraum aufbaut, da nur über dem Ablauf 9 und den Kondensator 27 eine Verbindung mit der Atmosphäre üblicherweise besteht. In den Kondensator und ragt ein Temperaturfühler 38 hinein, der in Abhängigkeit von der Temperatur der abströmenden Gase einen Frischwasserzulauf über ein Rohr 37 regelt, das in den Kondensationsraum 34 einmündet. Auf diese Weise wird auch das über den Ablauf 9 in den Kondensationsraum gelangende Fett aus dem Kondensator ausgespült und gelangt über die Abflußleitung 32 in die üblicherweise im Gebäude vorgesehene Abflußleitung. Auf diese Weise ist der Garraum 5 durch zwei Sperren nach Art eines Siphons gegen aufsteigende Kanaldämpfe gesichert und zwar einmal durch den als Druckbegrenzungsvorrichtung dienenden Kondensator 27 und andererseits durch den in der Zeichnung nicht dargestellten Siphon der im Gebäude vorgesehenen Abflußleitung.

Das U-Rohr 22 dient mit seiner Wassersäule als Überdrucksicherung für den Dampferzeuger 14. Diese Aufgabe wird durch eine Wassersäule 38 erfüllt, die im drucklosen Zustand die gleiche Flüssigkeitshöhe wie im Dampferzeuger aufweist. Im Betrieb wird allerdings aufgrund eines vorhandenen Druckes die Wassersäule in dem freien Schenkel 24 höher stehen als in dem über einen Verbindungsstutzen 41 mit dem Dampferzeuger 14 verbundenen Schenkel 23, weshalb die Überströmkante 40 zwischen dem Dampferzeuger 14 und dem Schenkel 23 auch niedriger angeordnet ist als die Überströmkante 39 zwischen dem freien Schenkel 24 und dem Fallrohr 26. Bei einer Überschreitung des höchstzulässigen Druckes wird die in dem U-Rohr 22 vorhandene Wassersäule 38 über die Überströmkante 39 vollständig aus dem U-Rohr gedrückt, wodurch der Dampf über den Krümmer 25 zu dem Entlüftungsrohr 31 und damit ins Freie gelangen kann. Die verdrängte Wassersäule gelangt über das Fallrohr 26 in den Kondensator 27 bzw. in den Ableitungsraum 30 und von dort in die Abflußleitung 32. Damit nach einem solchen Ausschub der Wassersäule das U-Rohr nicht leer bleibt, ist dieses über eine Verbindungsleitung 42 mit dem Dampferzeuger 14 verbunden.

Mit 43 ist eine Zuführungsleitung für die Frischwassereinspeisung bezeichnet, die in dem Verbindungskrümmer 25 über dem freien Schenkel 24 einmündet, so daß das frische Wasser über den Schenkeln 24 den Schenkel 23 und den Verbindungsstutzen 41 in den Verdampfer gelangt. Die Zuführungsleitung 43 befindet sich somit über dem Wasserstand des U-Rohres, der sich maximal bis zur Überströmkante 39 erstrecken kann, da dann das Wasser über das Fallrohr 26 in den Ableitungsraum 30 gelangt. Außerdem ist die Speisewasserzuführung druckfrei, da dieser Bereich des Rohrkrümmers 25 über die Entlüftungsleitung 31 mit der Atmosphäre in Verbindung steht.

Die vorstehend beschriebenen Vorgänge spielen sich ab, wenn ein so großer Überdruck eintritt, daß die Flüssigkeitssäule aus dem U-Rohr herausgedrückt wird. Dies stellt die letzte Sicherung dar, um einen zu großen Druckanstieg im Dampferzeuger und damit auch im Garraum zu verhindern.

Tritt aber ein allmählicher Druckanstieg ein, so erreicht die Flüssigkeitssäule 38 eine mit 44 bezeichnete Flüssigkeitssonde, die ein Signal zur Abschaltung des Heizelementes liefert. Hierdurch tritt eine Verminderung der Dampfbildung und damit eine Verminderung des Druckes in dem Garraum und im Dampferzeuger ein, wodurch die Flüssigkeitssäule 38 wieder abfällt und die Flüssigkeitssonde 44 das Signal für die Einschaltung der Heizung abgibt, nachdem sie nicht mehr in Berührung mit der Wassersäule 38 steht. Mit 45 ist eine Wassermangelsonde bezeichnet, die in dem U-Rohr in einer Höhe vorgesehen ist, die sich oberhalb der Heizung des Dampferzeugers befindet. Diese Wassermangelsonde schaltet die Heizung ab, wenn sie sich nicht mehr im Wasser befindet, um sicherzustellen, daß der Wasserspiegel nicht so weit absinken kann, daß die Heizung 19 freiliegt. Weiterhin ist in dem U-Rohr 22 eine Wasserniveausonde 46 vorgesehen, die bei Absinken des Wasserstandes, also bei freiwerdender Sonde das in der Zuführungsleitung 43 vorhandene und in der Zeichnung nicht dargestellte Ventil derart beeinflußt, daß Frischwasser zugeführt wird. Die Anordnung der Wasserniveausonde 46 in dem U-Rohr hat den Vorteil, daß Schwankungen des Wasserstandes aufgrund der Dampfentwicklung in diesem Bereich nicht eintreten. Die Sonde befindet sich also in einer beruhigten Zone. Dies gilt auch für die Anordnung der Wassermangelsonde 45.

Damit sich allzu große Schwingungen in dem U-Rohr 22 der Wassersäule 38 nicht einstellen können, die zu einer unnötig hohen Schaltfolge der Flüssigkeitssonde 44 führen würden, kann eine Dämpfungseinrichtung 47 in Form einer Blende vorgesehen sein.

Mit 48 ist eine Meßleitung bezeichnet, die den Garraum 5 mit dem Fallrohr 26 und über das Rohr 31 mit der Atmosphäre verbindet. Der Querschnitt der Meßleitung 48 ist so gering, daß der über diese Leitung erfolgende Gasaustausch bezogen auf das Volumen des Garraumes vernachlässigbar klein ist, so daß es nicht erforderlich ist, diese Leitung an den Ablauf 9 anzuschließen, der mit dem Mischkondensator und deshalb mit der Druckbegrenzungsvorrichtung in Verbindung steht. Mit 49 ist ein Wärmefühler bezeichnet, der in der Nähe des Endes der als Kühlschlange ausgebildeten Meßleitung vorgesehen ist, um eine Abkühlung der nicht kondensierbaren Gasteile zu erreichen. Diese Abkühlung hat zur Folge, daß der Wärmefühler nicht mehr mit einer Wärmemenge beaufschlagt wird, welche so hoch ist, daß das Heizelement 19 ausgeschalten wird oder ausgeschalten bleibt. Solange Dampfbestandteile in den abziehenden Gasen enthalten sind, wird dem Wärmefühler 49 genügend Wärme zugeführt, so daß er das Heizelement abschaltet. Mit dieser Anordnung wird also vermieden, daß heiße aus dem Garraum austretende Luft ein Einschalten des Heizelements und damit eine Dampferzeugung verhindert, obwohl sie notwendig wäre, da aus dem Garraum nur noch heiße Luft über die Meßleitung 48 austritt. Dieser Regelungsvorgang ist für einen Bratvorgang mit Dampfzuführung notwendig, da nach einer längeren Betriebszeit der Fall eintreten kann, daß heiße Luft mit 150° oder mehr in die Meßleitung eintritt und dort den Wärmefühler auf einem so hohen Niveau hält, daß er ein Einschalten der Heizelemente 19 verhindert, obwohl Dampf notwendig wäre. Durch die Abkühlung der Luft, was immer dann möglich ist, wenn sich kein oder nur wenig Dampf in den abziehenden Gasen befindet, wird der Wärmefühler auf ein Niveau abgesenkt, auf welchem er das Einschalten der Heizung 19 veranlaßt, um neuen Dampf in den Garraum eintreten zu lassen.

## Patentansprüche

1. Vorrichtung zur Wärmebehandlung von Substanzen, insbesondere Nahrungsmitteln unter Zuhilfenahme von sich bewegendem Dampf als Wärmeträger mit einem Dampferzeuger mit temperaturgeregeltem Heizelement, der durch eine Druckbegrenzungsvorrichtung gegen Überdruck gesichert ist und mit einem Garraum in offener Verbindung steht, welcher einen Kondensatablauf und einen Wrasenabzug aufweist, wobei im Garraum mittels Druckbegrenzungsvorrichtungen in den nach außen führenden Leitungen ein Betriebsdruck einstellbar ist, der unterhalb desjenigen Druckes liegt, bei dem die Druckbegrenzungsvorrichtung des Dampferzeugers öffnet, dadurch gekennzeichnet, daß jede Druckbegrenzungsvorrichtung als Wassersperre (22, 27) nach Art eines Siphons ausgebildet ist, deren wirksame zu verdrängende Wasserhöhe die Höhe der Druckbegrenzung bestimmt.

2. Vorrichtung nach Anspruch 1, dadurch gekennzeichnet, daß die aus dem Garraum (5) führenden druckbegrenzenden Leitungen (9) jeweils eine Druckbegrenzungsvorrichtung aufweisen, die als Mischkondensator (27) mit Wassersperre ausgebildet ist.

3. Vorrichtung nach Anspruch 1, dadurch gekennzeichnet, daß die aus dem Garraum (5) führenden Leitungen eine gemeinsame Druckbegrenzungsvorrichtung (27) aufweisen.

4. Vorrichtung nach einem der Ansprüche 1 bis 3, dadurch gekennzeichnet, daß der Kondensator (27) in einen Kondensationsraum (29) der eine Wasserfüllung aufweist und einen Ableitungsraum (30) unterteilt ist, daß der Kondensationsraum (29) durch eine von oben in die Wasserfüllung eintauchende Trennwand (33) in zwei Räume (34, 35) getrennt ist, von denen der eine (34) mit dem Garraum (5) und der andere (35) mit dem Ableitungsraum (30) in Verbindung steht, daß die Eintauchtiefe der Trennwand (33) die Druckhöhe der Druckbegrenzung bestimmt und daß der Ableitungsraum (30) über eine Abflußleitung (32) mit einer gebäudefesten Abflußleitung mit Siphonverschluß und über eine weitere Leitung (26, 31) mit der Atmosphäre in Verbindung steht.

5. Vorrichtung nach einem der Ansprüche 1 bis 4, dadurch gekennzeichnet, daß ein Temperaturfühler (36) in der Wassersperre (29) den Wasseraustausch bzw. die Wasserzufuhr (37) regelt.

6. Vorrichtung nach einem der Ansprüche 1 bis 5, dadurch gekennzeichnet, daß ein Wärmefühler (48) für die Regelung des Heizelementes (19) des Dampferzeugers (14) in einer Wrasenabzugsleitung oder einer gesonderten Meßleitung (48) vorgesehen ist.

7. Vorrichtung nach einem der Ansprüche 1 bis 6, dadurch gekennzeichnet, daß der zur Regelung des Heizelementes (19) des Dampferzeugers dienende Wärmefühler (49) in einer offenen oder druckbegrenzenden Wrasenabzugs- oder ebenso ausgebildeten Meßleitung (48) vorgesehen ist, die einer Kühlwirkung für die abziehenden Gase unterliegt, und der Wärmefühler (49) an einer Stelle der Leitung (48) angeordnet ist, an der der Wärmeinhalt der abziehenden Gase so weit abgesenkt ist, daß bei Fehlen eines Dampfanteils das Heizelement (19) eingeschaltet wird.

8. Vorrichtung nach Anspruch 7, dadurch gekennzeichnet, daß die Meßleitung (48) lang, z. B. als Kühlschlange ausgebildet ist.

9. Vorrichtung nach Anspruch 7, dadurch gekennzeichnet, daß die Meßleitung (48) durch eine Kühlvorrichtung, z. B. den Mischkondensator (27), hindurchgeführt ist.

10. Vorrichtung nach einem der Ansprüche 1 bis 9, dadurch gekennzeichnet, daß die Meßleitung (48) entweder durch einen kleinen querschnitt oder durch eine zusätzliche Drossel gedrosselt ist und mit der Atmosphäre in Verbindung steht.

11. Vorrichtung nach einem der Ansprüche 1 bis 10, dadurch gekennzeichnet, daß die Wassersperre für die Überdrucksicherung des Dampferzeugers (14) ein U-Rohr (22) mit Wasserfüllung (38) und eine Flüssigkeitssonde (44) umfaßt, die bei Berührung mit der Flüssigkeit ein Signal zur Steuerung der Heizung (19) des Dampferzeugers (14) liefert.

12. Vorrichtung nach Anspruch 11, dadurch gekennzeichnet, daß der freie Rohrschenkel (24) über einen nach abwärts gerichteten Rohrkrümmer (25) und ein daran anschließendes Fallrohr (26), das mit dem Entlüftungsrohr (31) verbunden ist, mit dem Kondensator (27) in Verbindung steht.

13. Vorrichtung nach Anspruch 11 oder 12, dadurch gekennzeichnet, daß in den freien Rohrschenkel (24) die Speisewasserzuführung (43) für den Dampferzeuger (14) einmündet.

14. Vorrichtung nach einem der Ansprüche 11 bis 13, dadurch gekennzeichnet, daß das U-Rohr (22) über eine zusätzliche Verbindungsleitung (42) mit dem Dampferzeuger (14) auf einem Niveau verbunden ist, das sich unterhalb desjenigen Wasserstandes befindet, der durch eine Wasserniveausonde (45) garantiert ist.

15. Vorrichtung nach einem der Ansprüche 11 bis 14, dadurch gekennzeichnet, daß die Wassermangelsonde (45) und/oder Wasserniveausonde (46) in dem U-Rohr (22) angeordnet sind.

16. Vorrichtung nach einem der Ansprüche 1 bis 15, dadurch gekennzeichnet, daß eine Heizung (11) für die Aufheizung des Wärmeträgers vorgesehen ist.

## Claims

1. Apparatus for heat treating substances, in particular foodstuffs, with the aid of moving steam as a heat transfer medium having a steam generator with a temperature-controlled heating element, the steam generator being protected against excess pressure by means of a pressure limiting apparatus and being in open connection with a cooking chamber which has a condensate outlet and a water vapour exhaust, a working pressure being adjustable in the cooking chamber by means of a pressure-limiting apparatus in the outward-leading lines, said pressure being lower than the pressure at which the pressure-limiting apparatus of the steam generator opens, characterised in that each pressure-limiting apparatus takes the form of a water obstacle (22, 27) in the manner of a siphon whose effective water level for displacement determines the level of pressure limitation.

2. Apparatus according to claim 1, characterised in that each of the pressure-limiting lines (9) leading out of the cooking chamber (5) has a pressure-limiting apparatus in the form of a co-condenser (27) with a water obstacle.

3. Apparatus according to claim 1, characterised in that the lines leading out of the cooking chamber (5) have a common pressure-limiting apparatus (27).

4. Apparatus according to one of claims 1 to 3, characterised in that the condenser (27) is subdivided into a condensation chamber (29), which contains water, and a drainage chamber (30), in that the condensation chamber (29) is divided by a dividing wall (33), which is immersed from above into the water, into two chambers (34, 35) of which one (34) is connected to the cooking chamber (5) and the other (35) is connected to the drainage chamber (30), in that the depth of immersion of the dividing wall (33) determines the level of pressure limitation and in that the drainage chamber (30) is connected by way of a discharge line (32) to a permanent discharge line with a siphon trap and by way of a further line (26, 31) to atmosphere.

5. Apparatus according to one of claims 1 to 4, characterised in that a thermometer probe (36) in the water obstacle (29) regulates the exchange or supply of water (37).

6. Apparatus according to one of claims 1 to 5, characterised in that a heat detector (48) for regulating the heating element (19) of the steam generator (14) is provided in a water vapour exhaust line or in a separate measuring line (48).

7. Apparatus according to one of claims 1 to 6, characterised in that the heat detector (49) for regulating the heating element (19) of the steam generator is provided in an open or pressure-limiting water vapour exhaust line or similarly constructed measuring line (48) which is subject to a cooling action for the escaping gases, and the heat detector (49) is disposed at a point of the line (48) at which the heat content of the escaping gases has sunk so low that, in the absence of a steam content, the heating element (19) is switched on.

8. Apparatus according to claim 7, characterised in that the measuring line (48) is long, e.g. takes the form of a cooling coil.

9. Apparatus according to claim 7, characterised in that the measuring line (48) is conveyed through a cooling device, e.g. the co-codenser (27).

10. Apparatus according to one of claims 1 to 9, characterised in that the measuring line (48) is throttled either by a small cross-section or by an additional throttle and is connected to atmosphere.

11. Apparatus according to one of claims 1 to 10, characterised in that the water obstacle for protecting the steam generator (14) from excess pressure comprises a U-shaped pipe (22) containing water (38) and a liquid probe (44) which, on contact with the liquid, supplies a signal for controlling the heating system (19) of the steam generator (14).

12. Apparatus according to claim 11, characterised in that the free pipe limb (24) is connected to the condenser (27) by a downward-pointing pipe bend (25) and a fall-pipe (26) which is connected to said pipe bend and to the ventilating pipe (31).

13. Apparatus according to claim 11 or 12, characterised in that the feed-water supply system (43) for the steam generator (14) opens out into the free pipe limb (24).

14. Apparatus according to one of claims 11 to 13, characterised in that the U-shaped pipe (22) is connected by an additional connecting line (42) to the steam generator (14) at a level located below the water level which is guaranteed by means of a water level probe (45).

15. Apparatus according to one of claims 11 to 14, characterised in that the low-water probe (45) and/or water level probe (46) are disposed in the U-shaped pipe (22).

16. Apparatus according to one of claims 1 to 15, characterised in that a heating system (11) is provided for heating the heat transfer medium.

**Revendication**

1. Dispositif pour le traitement thermique de substances, et en particulier de produits alimentaires, à l'aide de vapeur en mouvement servant de fluide caloporteur, comprenant un générateur de vapeur qui est muni d'un élément chauffant à régulation de température, qui est protégé des surpressions par un dispositif de limitation de la pression, et qui est directement relié à une chambre de cuisson comportant un écoulement des produits de condensation et une évacuation des vapeurs chaudes, cependant que l'on peut instaurer dans la chambre de cuisson, au moyen de dispositifs de limitation de la pression montés dans les conduites allant vers l'extérieur, une pression de fonctionnement régulée qui est inférieure à celle pour laquelle s'ouvre le dispositif de limitation de la pression du générateur de vapeur, caractérisé par le fait que chaque dispositif de limitation de la pression est réalisé sous la forme d'un barrage hydraulique (22, 27) fonctionnant à la manière d'un siphon dont le niveau de l'eau active à refouler détermine la limitation de la pression.

2. Dispositif selon la revendication 1, caractérisé par le fait que chacune des conduites de limitation de la pression (9) qui amènent hors de la chambre de cuisson (5) comporte un dispositif de limitation de la pression qui est réalisé sous la forme d'un condenseur à mélange (27) muni d'un barrage hydraulique.

3. Dispositif selon la revendication 1, caractérisé par le fait que les conduites qui amènent hors de la chambre de cuisson (5) comportent un dispositif de limitation de la pression (27) qui leur est commun.

4. Dispositif selon l'une des revendications 1 à 3. caractérisé par le fait que le condenseur (27) est divisé en une chambre de condensation (29) comportant un dispositif de remplissage en eau et une chambre de décharge (30), par le fait que la chambre de condensation (29) est divisée, par une cloison de séparation (33) plongeant dans l'eau depuis le haut, en deux chambres (34, 35) dont l'une (34) communique avec la chambre de cuisson (5) et dont l'autre (35) communique avec la chambre de décharge (30), par le fait que la profondeur à laquelle la cloison de séparation (33) pénètre dans l'eau détermine le niveau de pression du limiteur de pression, et par le fait que la chambre de décharge (30) communique par une conduite d'évacuation (32) avec une conduite d'évacuation installée dans le bâtiment et munie d'une fermeture à siphon, et par une autre conduite (26, 31) avec l'atmosphère.

5. Dispositif selon l'une des revendications 1 à 4, caractérisé par le fait qu'un capteur de température (36) monté dans le barrage hydraulique (29) assure la régulation de l'échange d'eau ou, respectivement, de l'amenée d'eau (37).

6. Dispositif selon l'une des revendications 1 à 5, caractérisé par le fait que, pour la régulation de l'élément chauffant (19) du générateur de vapeur (14), il est prévu un capteur de chaleur (48) dans une conduite d'évacuation des vapeurs chaudes ou dans une conduite de mesure séparée (48).

7. Dispositif selon l'une des revendications 1 à 6, caractérisé par le fait que le capteur de chaleur (49) qui sert à la régulation de l'élément chauffant (19) du générateur de vapeur est prévu dans une conduite d'évacuation des vapeurs chaudes ouverte ou limitant la pression, ou dans une conduite de mesure (48) réalisée de la même manière qui est soumise à un effet de refroidissement pour les gaz sortants, et que le capteur de chaleur (49) est disposé à un endroit de la conduite (48) où la teneur en chaleur des gaz sortants est suffisamment réduite pour que l'élément chauffant (19) soit mis en marche lorsqu'il manque une fraction constituée par de la vapeur.

8. Dispositif selon la revendication 7, caractérisé par le fait que la conduite de mesure (48) est longue, et réalisée par exemple sous la forme d'un serpentin de refroidissement.

9. Dispositif selon la revendication 7, caractérisé par le fait que la conduite de mesure (48) traverse un dispositif de refroidissement, par exemple le condenseur à mélange (27).

10. Dispositif selon l'une des revendications 1 à 9, caractérisé par le fait que la conduite de mesure (48) est étranglée, soit par une partie à faible diamètre, soit par un étranglement supplémentaire, et qu'elle communique avec l'atmosphère.

11. Dispositif selon l'une des revendications 1 à 10, caractérisé par le fait que le barrage hydraulique qui protége le générateur de vapeur (14) contre la surpression comprend un tube en U (22) à remplissage d'eau (38) et un détecteur de liquide (44) qui, lorsqu'il est en contact avec le liquide, fournit un signal pour commander le chauffage (19) du générateur de vapeur (14).

12. Dispositif selon la revendication 11, caractérisé par le fait que la branche libre (34) du tube communique avec le condenseur (27) à travers un tuyau coudé (25) dirigé vers le bas et à travers un tuyau de descente (26) qui s'y raccorde et qui est relié au tuyau d'évacuation de l'air (31).

13. Dispositif selon la revendication 11 ou 12, caractérisé par le fait que l'amenée d'eau d'alimentation (43) destinée au générateur de vapeur (14) débouche dans la branche libre (24) du tube.

14. Dispositif selon l'une des revendications 11 à 13, caractérisé par le fait que le tube en U (22) est relié au générateur de vapeur (14) par une conduite de liaison supplémentaire (42) à un niveau qui se trouve au-dessous du niveau de l'eau qui est déterminé par un détecteur de niveau d'eau (45).

15. Dispositif selon l'une des revendications 11 à 14, caractérisé par le fait que le détecteur de manque d'eau (45) et/ou le détecteur de niveau d'eau (46) sont disposés dans le tube en U (22).

16. Dispositif selon l'une des revendications 1 à 15, caractérisé par le fait qu'un dispositif de chauffage (11) est prévu pour le réchauffement du fluide caloporteur.

# Fig.1

Fig.2